# EUROPÄISCHE PATENTSCHRIFT

(11) **EP 2 396 541 B1**
(45) Veröffentlichungstag und Bekanntmachung des Hinweises auf die Patenterteilung: **09.11.2016**
(21) Anmeldenummer: 10723479.1
(22) Anmeldetag: 15.02.2010
(51) Int. Cl.: F03D 80/00

(54) **WINDENERGIEANLAGE MIT ÜBERWACHUNGSSENSOREN**
WIND TURBINE COMPRISING MONITORING SENSORS
ÉOLIENNE POURVUE DE CAPTEURS DE SURVEILLANCE

(30) Priorität: 16.02.2009 DE 102009009039
(43) Veröffentlichungstag der Anmeldung: 21.12.2011
(73) Patentinhaber: PRÜFTECHNIK Dieter Busch AG, 85737 Ismaning (DE)
(72) Erfinder: BECKER, Edwin, 48734 Reken (DE); LOESL, Johann, 84172 Buch am Erlbach (DE); KENZLER, Marcel, 15711 Königs Wusterhausen (DE)
(74) Vertreter: Copsey, Timothy Graham
(86) Internationale Anmeldenummer: PCT/DE2010/000171
(87) Internationale Veröffentlichungsnummer: WO 2010/091675

(56) Entgegenhaltungen:
- EP-A2- 1 674 724
- WO-A1-01/33075
- WO-A1-02/084114
- DE-A1- 10 219 664
- DE-U1-202007 008 066
- GB-A- 2 319 812
- US-A1- 2003 127 862
- US-A1- 2004 057 828
- US-A1- 2007 057 517

## Beschreibung

Die vorliegende Erfindung betrifft eine Windenergieanlage mit einem Rotor und mindestens zwei Blättern.

Windenergieanlagen umfassen typischerweise einen Rotor mit Nabe und drei Rotorblättern, der in horizontaler Ausrichtung in einer Maschinengondel gelagert ist, die einen von dem Rotor angetriebenen Generator beherbergt und drehbar auf einem Turm gelagert ist. In der Regel sind die Rotorblätter verstellbar an der Rotornabe gelagert, um den Anstellwinkel jedes einzelnen Rotorblatts separat zu steuern. In der aktuellen Forschung ist sogar angedacht, auch Teile des Rotorblatts separat zu verstellen. Durch eine solche Verstellung des Anstellwinkels (auch Pitch-Winkel genannt) kann die Drehzahl des Rotors geregelt werden.

Windenergieanlagen sind grundsätzlich schwingungsanfällig, insbesondere aufgrund von Unwuchten des Rotors. Die auftretenden Unwuchten haben im wesentlichen die folgenden Ursachen: einerseits Massenunwuchten, insbesondere aufgrund von ungleichen Rotorblattmassen oder ungleichen Massenverteilungen im einzelnen Rotorblatt, Nabenunwuchten, Exzentrizitäten des kompletten Rotors, Eisansatz an den Rotorblättern, Wassereinbruch ins Innere der Rotorblätter, und andererseits aerodynamische Unwuchten, insbesondere aufgrund von Blattwinkelfehlern, ungleichen Rotorblattprofilformen, Rotorblattschäden, Schräganströmung des Rotors sowie standortbedingten Anregungen von außen, z.B. durch Turmvorstau und die Tatsache, dass die Windgeschwindigkeit in der Regel von der Höhe über Grund abhängt, so dass ein und dasselbe Rotorblatt unterschiedlichen aerodynamischen Kräften ausgesetzt ist, je nachdem, ob es gerade unten oder oben steht. Solche Unwuchten führen zu einer verringerten Lebensdauer der Windenergieanlage. Eine Minimierung der Unwuchten des Rotors ist deshalb wünschenswert. Auch ist eine Diagnose des Betriebszustands der Windenergieanlage von Interesse, um bei Auftreten von unzulässigen Belastungen die Windenergieanlage aus Sicherheitsgründen abzuschalten oder um schadhafte Komponenten zu ermitteln und rechtzeitig auszutauschen.

Ein Überblick über die Schwingungsproblematik bei Windenergieanlagen ist beispielsweise in dem Magazin telediagnose.com, Ausgabe Nr. 12, unter www.telediagnose.com/telediagnose/index.html zu finden.

In der DE 102 19 664 A1 ist eine Windenergieanlage beschrieben, bei welcher Sensorelemente zum Ermitteln von mechanischen Belastungen des Rotors an den Rotorblättern und an der Rotorwelle vorgesehen sind, um die Rotorblätter auf der Basis der ermittelten mechanischen Belastungen zu verstellen. Die auf der Rotorwelle vorgesehenen Sensoren dienen dabei zur Erfassung von Nick- und Giermomenten. Ferner können die Rotorblätter mit Ballasttanks versehen sein, um Wasser aus einem in der Nabe vorgesehenen Vorratstank in die Ballasttanks zu pumpen oder Wasser aus den Ballasttanks in den Vorratstank abzulassen, um eine eventuelle Rotorunwucht durch Nachtrimmen zu minimieren. Während das Befüllen der Ballasttanks auch im Betrieb möglich ist, muss zum Ablassen eines Ballasttanks der Rotor in der entsprechenden Position stillgesetzt werden.

Aus der DE 10 2004 014 992 A1 ist eine Windenergieanlage bekannt, bei welcher ein Unwuchtsensor zum Ermitteln der Unwucht des Rotors vorgesehen ist und die Rotorblätter mit in axialer Richtung verstellbaren Auswuchtgewichten versehen sind, die entsprechend der ermittelten Unwucht verstellt werden, um die Unwucht des Rotors zu minimieren.

In der EP 1 674 724 A2 ist allgemein die Überwachung von Komponenten einer Windenergieanlage mittels verschiedener Sensoren, beispielsweise Beschleunigungssensoren, Gyroskopen, Näherungssensoren und Inklinometern, beschrieben, wob ei in Bezug auf die Überwachung der Rotorblätter die Verwendung von Näherungssensoren beschrieben ist, mittels derer die Verbiegung der Blätter erfasst werden soll.

In der WO 01/33075 A1 ist die Lasterfassung von mittels auf den Rotorblättern einer Windenergieanlage angebrachten Dehnungsmessstreifen zwecks Steuerung der Pitch-Verstellung der Blätter beschrieben.

In derWO 2006/012827 A1 ist die Zustandsüberwachung der Rotorblätter einer Windenergieanlage im Betrieb mittels Körperschall beschrieben, wobei auf den Blättern Bewegungssensoren angeordnet sind.

In der WO 2006/039903 A1 ist beschrieben, dass die Pitch-Einstellung der Rotorblätter einer Windenergieanlage in Abhängigkeit von der Drucksdifferenz zwischen Blattvorderseite und Blattrückseite erfolgen soll. In der WO 2007/131489 A1 ist die Verwendung von Beschleunigungssensoren auf den Rotorblättern einer Windenergieanlage zwecks Regelung des Pitch-Winkels beschrieben, wobei Schwingungsmessungen durchgeführt werden.

In der WO 2008/058876 A2 ist beschrieben, dass zwecks Vermeidung der Kollision der Rotorblätter mit dem Turm einer Windenergieanlage am Turm bzw. an der Gondel Abstandssensoren angeordnet werden können, um den Abstand des jeweiligen Rotorblatts zu einem vorgegebenen Punkt der Windenergieanlage zu messen und ggf. eine Kollisionswarnung auszugeben.

Die WO 2005/068834 A1 betrifft eine Windenergieanlage, bei welcher der Zustand des Rotorblatts mittels Dehnungsmessstreifen überwacht wird und die Position des Rotorblatts mittels GPS überwacht wird.

Die Zustandsüberwachung von Rotorblättern mittels Dehnungsmessstreifen ist insofern problematisch, als Dehnungsmessstreifen schwierig zu installieren und relativ kurzlebig sind. Fern messen Dehnungsmessstreifen grundsätzlich nur lokal in der Struktur des Rotorblatts Dies gilt auch für Beschleunigungssensoren bzw. Bewegungssensoren.

Es ist Aufgabe der vorliegenden Erfindung, eine möglichst aussagekräftige Zustandsüberwachung bezüglich der Rotorblätter einer Windenergieanlage zu realisieren,

Diese Aufgabe wird erfindungsgemäß gelöst durch eine Windenergieanlage gemäß Anspruch 1 sowie ein Verfahren gemäß Anspruch 3.

Bei der erfindungsgemäßen Lösung ist vorteilhaft, dass dadurch, dass jedes Rotorblatt mit mindestens einer mindestens zweiachsigen Inklinometeranordnung versehen wird, mittels welcher die Verbiegung und/oder Verdrehung des Blatts bezüglich der Längsachse des Blatts ermittelt wird, eine aussagekräftige Zustandsbewertung hinsichtlich der betriebsbedingten Verformungen der Rotorblätter ermöglicht wird. Dabei ist insbesondere vorteilhaft, dass mittels Inklinometern ein Bezug zur Rotationsrichtung bzw. zum Erdmittelpunkt hergestellt wird, d.h. es wird ein absoluter Bezugsrahmen vorgegeben, wodurch die Genauigkeit der Messung der Verformung des Rotorblatts erzielt werden kann. Ferner kann mittels der Inklinometeranordnung auch die Pitch-Verstellung der Rotorblätter überwacht werden.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: ein schematisches Beispiel einer erfindungsgemäßen Windenergieanlage; und

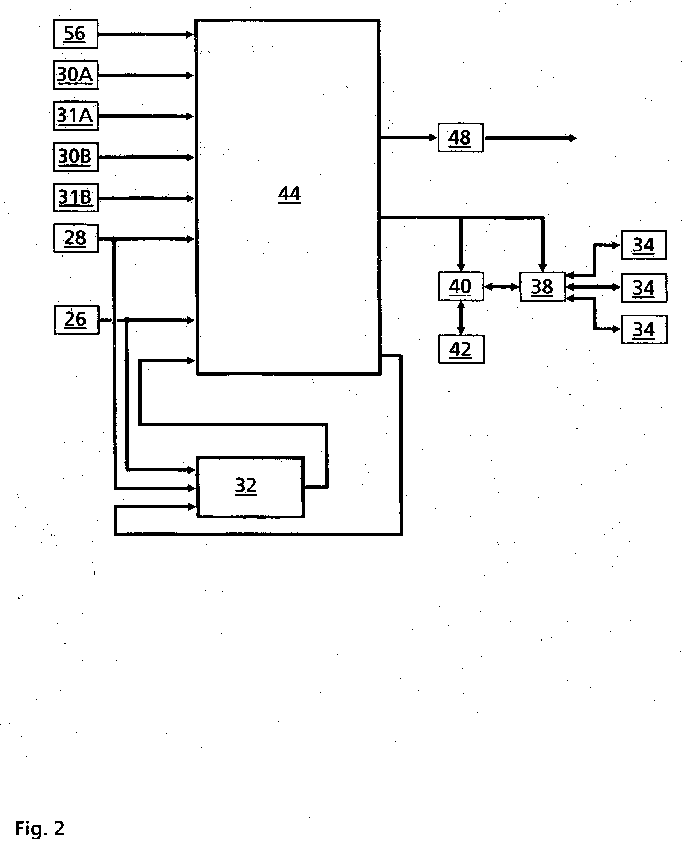

- Fig. 2: ein Blockschaltbild der wesentlichen Komponenten der Windenergieanlage von Fig. 1.

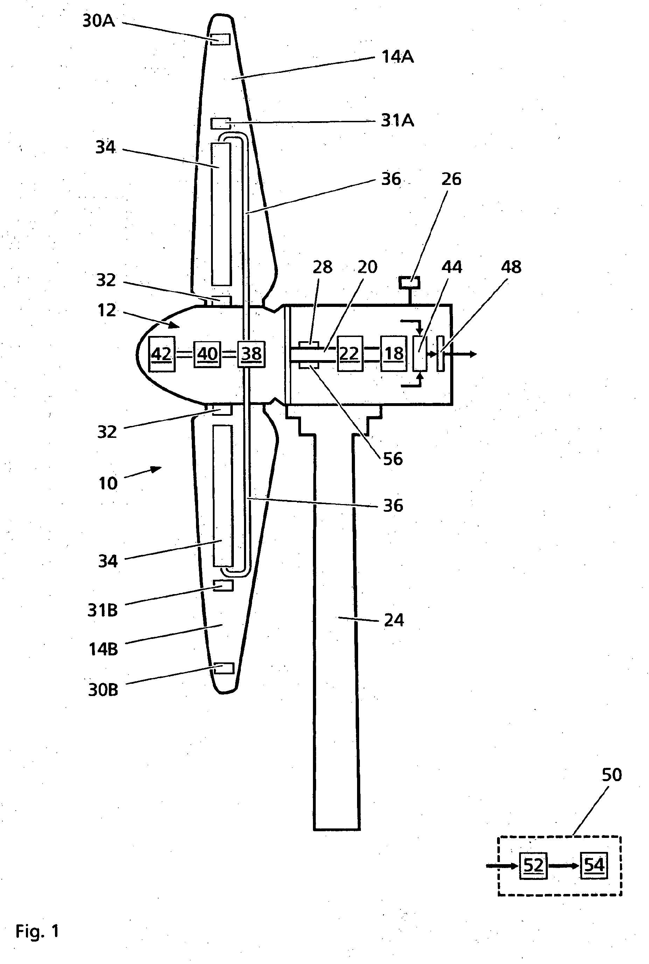

In Fig. 1 ist ein schematisches Beispiel einer erfindungsgemäßen Windenergieanlage gezeigt. Dabei ist ein Rotor 10 mit einer Nabe 12 für drei Rotorblätter (davon sind in Fig. 1 nur zwei Rotorblätter 14A, 14B gezeigt) vorgesehen. Der Rotor 10 ist in horizontaler Ausrichtung in einer Gondel 16 gelagert, die einen Generator 18 beherbergt, der von der Rotorwelle 20 über ein Getriebe 22 angetrieben wird. Die Gondel 16 ist um eine vertikale Achse drehbar auf einem Turm 24 gelagert. Die Gondel weist ferner einen Sensor 26 für die Windgeschwindigkeit und die Windrichtung auf Außerdem ist ein Sensor 28 für die Erfassung der Drehzahl des Rotors 10 vorgesehen.

In jedem Rotorblatt 14A, 14B ist mindestens eine mindestens zweiachsige Inklinometeranordnung vorgesehen (im Beispiel sind an jedem Rotorblatt in Längsrichtung des Blatts versetzt zwei Inklinometeranordnungen 30A, 31A bzw. 30B, 31B gezeigt). Die Inklinometeranordnungen sind vorgesehen, um für jedes Rotorblatt im Betrieb die Verbiegung und/oder Verdrehung des Blatts bezüglich der Längsachse des Blatts zu ermitteln. Die Verbiegung des Rotorblatts bezüglich der Längsachse des Blatts kann ermittelt werden, wenn die Inklinometeranordnung so angeordnet ist, dass sie eine Veränderung der Neigung der Inklinometeranordnung bezüglich einer Ebene erfassen kann, die senkrecht zu der Längsachse des Blatts steht (bei einem zweiachsigen Inklinometer entspricht dies der Ebene, die von den beiden Iriklinometerachsen aufgespannt wird). Eine Verdrehung des Rotorblatts bezüglich der Längsachse des Blatts kann erfasst werden, wenn die Inklinometeranordnung so angeordnet ist, dass sie eine Drehung des Inklinometers um die Längsachse des Rotorblatts erfassen kann (die entsprechende Achse des Inklinometers muss dabei parallel zu der Längsachse des Rotorblatts liegen).

Die Rotorblätter 14A, 14B sind jeweils mittels einer Blattverstellung 32 um ihre Längsachse bezüglich der Nabe 12 verstellbar, um in üblicher Weise eine Pitch-Verstellung der Rotorblätter 14A, 14B zu realisieren. Vorzugsweise wird dabei jedes Rotorblatt 14A, 14B einzeln verstellt.

In jedem Rotorblatt 14A, 14B ist mindestens ein Flüssigkeitstank 34 vorgesehen, der über Leitungen 36 mit einer Verteileranordnung 38 verbunden ist. Die Verteileranordnung 38 steht mit einer Pumpe 40 in Verbindung, die wiederum mit einem Flüssigkeitsreservoir 42 verbunden ist. Die Verteileranordnung 38, die Pumpe 40 und das Flüssigkeitsreservoir 42 sind in der Nabe 12 bezüglich der Nabe 12 feststehend angeordnet und drehen sich entsprechend beim Betrieb des Rotors 10 mit. Ferner ist eine Einheit 44 vorgesehen, um die Pumpe 40 bzw. die Verteileranordnung 38 zu steuern. Bei der Flüssigkeit kann es sich beispielsweise um Wasser handeln, gfs. mit Zusatz von Frostschutzmitteln, z.B. Glykol.

Die Signale des Drehzahlsensors 28, des Windmessers 26 und der Inklinometeranordnungen 30A, 31A, 30B, 31B werden zu der Datenverarbeitungseinheit 44 geleitet In der Datenverarbeitungseinheit 44 wird aus den Signalen der Inklinometeranordnungen für jedes Blatt die Verbiegung und/oder Verdrehung des Blatts bezüglich der Längsachse des Blatts ermittelt, woraus dann Rückschlüsse auf eine Massenunwucht und eine aerodynamische Unwucht des jeweiligen Rotorblatts gezogen werden. Einerseits können die auf diese Weise aufbereiteten bzw. ausgewerteten Signale der Inklinometeranordnungen als Kriterium für eine Sicherheitsabschaltung der Windenergieanlage bei Überschreiten vorgegebener Grenzwerte herangezogen werden. Die Auswertung der Signale der Inklinometeranordnungen kann mittels Zeitbereichmittelung, Frequenzanalyse, Klassierung und/oder Eventmonitoring erfolgen, wobei die Klassierung mittels eines Rainflow-Zähl-Algorithmus erfolgen kann.

Die ausgewerteten Daten oder aber auch die Signale der Inklinometeranordnungen in der ursprünglichen Form oder in einer vorverarbeiteten Zwischenform können online über eine Datentransfereinrichtung 48 zu einer entfernt von der Windenergieanlage 10 angeordneten Diagnosestelle 50 übermittelt werden, um den Zustand der Windenergieanlage zu bewerten. Der Datentransfer erfolgt dabei vorzugsweise per Internet und kann beispielsweise von der Diagnosestelle 50 aktiv angefordert werden oder erfolgt automatisch in gewissen Abständen per E-Mail. Die Diagnosestelle 50 umfasst eine Datenverarbeitungseinheit 52 zum Aufbereiten der empfangenen Daten sowie eine Anzeigeeinrichtung 54 zum Darstellen der aufbereiteten Daten.

Ferner verfügt die Einheit 44 vorzugsweise über einen Eingang für die Blattverstellung 32 und einen Eingang für den Windsensor 26. Aus der mittels der Signale der Inklinometeranordnungen ermittelten Rotorunwucht bzw. Blattverformungen, ggf. unter Berücksichtigung der Blattverstellung 32 und der Signale des Windsensors 26, erzeugt die Steuereinrichtung 44 ein Steuersignal für die von der Pumpe 40 und dem Verteiler 38 gebildeten Flüssigkeitstransferanordnung, um selektiv Flüssigkeit zwischen dem Flüssigkeitsreservoir 42 und den Flüssigkeitstanks 34 in Abhängigkeit von der erfassten Unwucht zu transferieren, um die Unwucht des Rotors 10 kontinuierlich zu minimieren.

Die Blattverstellung 32 berücksichtigt als Eingangssignale unter anderem die Signale des Windsensors 26 und des Drehzahlsensors 28 sowie ein Ausgangssignal der Steuereinheit 44, welches für die erfasste Rotorunwucht bzw. Verformung des jeweiligen Blatts repräsentativ ist. Auf diese Weise dient die Blattverstellung 32 der Drehzahlregelung und kann zusätzlich bei der Kompensation von Unwuchten des Rotors 10 mitwirken. Dabei wird durch das beschriebene Umpumpen von Flüssigkeit in die bzw. aus den Tanks 34 eine Glättung der Dynamik der Blattverstellung ermöglicht.

Die elektrische Versorgung der mitrotierenden Pumpe 40 erfolgt vorzugsweise über einen Schleifring (nicht gezeigt).

Bei der in Fig. 1 gezeigten Ausgestaltung der Tanks 34 ist die Zuleitung/Ableitung 36 jeweils an dem der Rotornabe 12 fernen Ende des Tanks 34 angeschlossen, wodurch bei sich drehendem Rotor 10 nicht nur die Möglichkeit der Flüssigkeitszufuhr zu den Tanks 34, sondern auch die Möglichkeit der Flüssigkeitsableitung aus den Tanks 34 jederzeit sichergestellt ist, da aufgrund der Zentrifugalkraft immer Flüssigkeit an dem der Rotornabe 12 fernen Ende des Tanks 34 ansteht, selbst wenn der Tank 34 nur wenig Flüssigkeit beinhaltet und sich Luft im System befindet. Grundsätzlich kann bei einer solchen Ausgestaltung der Tank 34 mit starren Wänden oder sackartig mit flexiblen Wänden ausgebildet sein.

Grundsätzlich kann pro Rotorblatt 14A, 14B ein einziger Tank 34 oder aber auch mehrere solcher Tanks vorgesehen sein. Ebenso kann statt eines einzigen Vorratsreservoirs 42 auch eine Mehrzahl solcher Reservoirs vorgesehen sein. Ferner kann statt einer für alle Tanks 34 gemeinsamvorgesehenen Pumpe 40 auch beispielsweise für jedes der Rotorblätter 14A, 14B oder für jeden der Tanks 34 eine eigene Flüssigkeitspumpe vorgesehen sein. Die Verteileranordnung 38 kann statt wie in Fig. 1 gezeigt als Block, d.h. als Dreiwegeventil, auch durch separat angesteuerte Ventile in jeder der Zuleitungen/Ableitungen 36 realisiert werden.

Die Signale der Inklinometeranordnungen können auch verwendet werden, um die Blattverstellung 32 zu überwachen. Umgekehrt können, wie bereits erwähnt, die Signale der Inklinometeranordnungen bei der Steuerung der Blattverstellung 32 berücksichtigt werden.

Am Nabenhauptlager (nicht gezeigt) kann ferner ein Unwuchtsensor in Form eines Schwingungssensors 56 vorgesehen sein, um eine Unwucht des Rotors 10 im Betrieb zu erfassen. Die Signale des Unwuchtsensors 56 werden ebenfalls in die Datenverarbeitungseinheit 44 eingespeist und können bei der Diagnostik der Windenergieanlage sowie bei der Steuerung der Blattverstellung 32 bzw. der Steuerung der Flüssigkeitspumpe 40 berücksichtigt werden.

## Patentansprüche

1. Windenergieanlage mit einem Rotor (10) mit mindestens zwei Blättern (14A, 14B), die jeweils mit mindestens einer mindestens zweiachsigen Inklinometeranordnung (30A, 30B, 31A, 31B) versehen sind, und einer Auswerteeinheit (44, 50, 52), um aus den Signalen der Inklinometeranordnungen für jedes Blatt im Getrieb die Verbiegung und/oder Verdrehung des Blatts bezüglich der Längsachse des Blatts zu ermitteln.

2. Windenergieanlage nach Anspruch 1, **dadurch gekennzeichnet, dass** jedes Blatt (14A, 14B) mit mehreren Inklinometeranordnungen (30A, 30B, 31A, 31B), die in Richtung der Längsachse des Blatts versetzt angeordnet sind, versehen ist.

3. Verfahren zum Betreiben einer Windenergieanlage mit einem Rotor (10) mit mindestens zwei Blättern (14A, 14B), die jeweils mit mindestens einer mindestens zweiachsigen Inklinometeranordnung (30A, 30B, 31A, 31B) versehen sind, wobei die Veränderung der Neigung der Inklinometeranordnung erfasst wird und daraus für jedes Blatt die Verbiegung und/oder die Verdrehung des Blatts bezüglich der Längsachse des Blatts ermittelt wird.

4. Verfahren nach Anspruch 3, **dadurch gekennzeichnet, dass** die Auswertung der Signale der Inklinometeranordnungen (30A, 30B, 31A, 31B) mittels Zeitbereichmittelung, Frequenzanalyse, Klassierung und/oder Eventmonitoring erfolgt.

5. Verfahren nach Anspruch 4, **dadurch gekennzeichnet, dass** die Klassierung mittels eines Rainflow-Zähl-Algorithmus erfolgt.

6. Verfahren nach einem der Ansprüche 3 bis 5, **dadurch gekennzeichnet, dass** die Signale der Inklinometeranordnungen (30A, 30B, 31A, 31B) bei der Verstellung des Anstellwinkels eines jeden Rotorblatts (14A, 14B) berücksichtigt werden.

7. Verfahren nach einem der Ansprüche 3 bis 6, **dadurch gekennzeichnet, dass** aus den Signalen der Inklinometeranordnungen (30A, 30B, 31A, 31B) Rückschlüsse auf die Massenunwucht und die aerodynamische Unwucht der Rotorblätter (14A, 14B) gezogen werden.

8. Verfahren nach einem der Ansprüche 3 bis 7, **dadurch gekennzeichnet, dass** die Rotorblätter (14A, 14B) jeweils mindestens einen Flüssigkeitstank (34) aufweisen und mindestens ein Flüssigkeitsreservoir (42) und eine Transferanordnung (38, 40)
vorgesehen ist, wobei entsprechend der ermittelten Verbiegung der Rotorblätter bei sich drehendem Rotor (10) mittels der Transferanordnung Flüssigkeit zwischen dem Flüssigkeitsreservoir bzw. den Flüssigkeitsreseryoirs und den Flüssigkeitstanks transferiert wird.

9. Verfahren nach einem der Ansprüche 3 bis 8, **dadurch gekennzeichnet, dass** die Signale der Inklinometeranordnungen (30A, 30B, 31A, 31B) als Kriterium zur Sicherheitsabschaltung der Windenergieanlage herangezogen werden.

10. Verfahren nach einem der Ansprüche 3 bis 9, dadurch gekerinzeichnet, dass die mittels der Inklinometeranordnungen (30A, 30B, 31A, 31B) gewonnenen Daten online zu einer von der Windenergieanlage entfernten Diagnosestelle (50) übertragen werden, um den Zustand der Windenergieanlage zu bewerten.

11. Verfahren nach Anspruch 10, **dadurch gekennzeichnet, dass** die Übertragung per Internet erfolgt, wobei vor der Übertragung eine Vorverarbeitung der Daten erfolgt.

## Claims

1. Wind turbine comprising a rotor (10) with at least two blades (14A, 14B), which are respectively provided with at least one inclinometer arrangement (30A, 30B, 31A, 31B) with at least two axes, and an evaluating unit (44, 50, 52) in order to determine from the signals of the inclinometer arrangements for each blade the bending and/or twisting of the blade with respect to the longitudinal axis of the blade during operation.

2. Wind turbine according to Claim 1, **characterized in that** each blade (14A, 14B) is provided with a number of inclinometer arrangements (30A, 30B, 31A, 31B), which are arranged offset in the direction of the longitudinal axis of the blade.

3. Method for operating a wind turbine comprising a rotor (10) with at least two blades (14A, 14B), which are respectively provided with at least one inclinometer arrangement (30A, 30B, 31A, 31B) with at least two axes, the variation in the inclination of the inclinometer arrangement being detected and the bending and/or twisting of the blade with respect to the longitudinal axis of the blade being determined therefrom for each blade.

4. Method according to Claim 3, **characterized in that** the evaluation of the signals of the inclinometer arrangements (30A, 30B, 31A, 31B) is performed by means of time range averaging, frequency analysis, classification and/or event monitoring.

5. Method according to Claim 4, **characterized in that** the classification is performed by means of a rainflow counting algorithm.

6. Method according to one of Claims 3 to 5, **characterized in that** the signals of the inclinometer arrangements (30A, 30B, 31A, 31B) are taken into consideration in the adjustment of the angle of attack of each rotor blade (14A, 14B).

7. Method according to one of Claims 3 to 6, **characterized in that** the signals of the inclinometer arrangements (30A, 30B, 31A, 31B) are used to draw conclusions concerning the mass imbalance and the aerodynamic imbalance of the rotor blades (14A, 14B).

8. Method according to one of Claims 3 to 7, **characterized in that** the rotor blades (14A, 14B) respectively have at least one liquid tank (34), and at least one liquid reservoir (42) and a transfer arrangement (38, 40) are provided, liquid being transferred between the liquid reservoir or the liquid reservoirs and the liquid tanks by means of the transfer arrangement in accordance with the determined bending of the rotor blades when the rotor (10) is rotating.

9. Method according to one of Claims 3 to 8, **characterized in that** the signals of the inclinometer arrangements (30A, 30B, 31A, 31B) are used as a criterion for the safety shutdown of the wind turbine.

10. Method according to one of Claims 3 to 9, **characterized in that** the data obtained by means of the inclinometer arrangements (30A, 30B, 31A, 31B) are transferred online to a diagnostic site (50) that is remote from the wind turbine to assess the state of the wind turbine.

11. Method according to Claim 10, **characterized in that** the transfer takes place over the Internet, a pre-processing of the data being performed before the transfer.

## Revendications

1. Eolienne comportant un rotor (10) avec au moins deux pales (14A, 14B), qui sont respectivement munies d'au moins un dispositif d'inclinomètre (30A, 30B, 31A, 31B) à au moins deux axes, et une unité d'exploitation (44, 50, 52), pour déterminer à partir des signaux des dispositifs d'inclinomètre pour chaque pale pendant le fonctionnement la courbure et/ou la torsion de la pale par rapport à l'axe longitudinal de la pale.

2. Eolienne selon la revendication 1, **caractérisée en ce que** chaque pale (14A, 14B) est munie de plusieurs dispositifs d'inclinomètre (30A, 30B, 31A, 31B), qui sont disposés en décalage dans la direction de l'axe longitudinal de la pale.

3. Procédé de conduite d'une éolienne comportant un rotor (10) avec au moins deux pales (14A, 14B), qui sont respectivement munies d'au moins un dispositif d'inclinomètre (30A, 30B, 31A, 31B) à au moins deux axes, dans lequel on détecte le changement de l'inclinaison du dispositif d'inclinomètre et on détermine à partir de celui-ci pour chaque pale la courbure et/ou la torsion de la pale par rapport à l'axe longitudinal de la pale.

4. Procédé selon la revendication 3, **caractérisé en ce que** l'on effectue l'exploitation des signaux des dispositifs d'inclinomètre (30A, 30B, 31A, 31B) par calcul de moyenne sur une plage de temps, par analyse de fréquence, par classification et/ou par surveillance des événements.

5. Procédé selon la revendication 4, **caractérisé en ce que** l'on effectue la classification au moyen d'un algorithme de comptage rainflow.

6. Procédé selon l'une quelconque des revendications 3 à 5, **caractérisé en ce que** l'on tient compte des signaux des dispositifs d'inclinomètre (30A, 30B, 31A, 31B) lors du réglage de l'angle d'attaque de chacune des pales du rotor (14A, 14B).

7. Procédé selon l'une quelconque des revendications 3 à 6, **caractérisé en ce que** l'on tire à partir des signaux des dispositifs d'inclinomètre (30A, 30B, 31A, 31B) des conclusions concernant le balourd massique et le balourd aérodynamique des pales du rotor (14A, 14B).

8. Procédé selon l'une quelconque des revendications 3 à 7, **caractérisé en ce que** les pales du rotor (14A, 14B) présentent respectivement au moins un réservoir de liquide (34) et il est prévu au moins une citerne de liquide (42) et un dispositif de transfert (38, 40), dans lequel on transfère du liquide entre la citerne de liquide ou les citernes de liquide et les réservoirs de liquide, au moyen du dispositif de transfert, en fonction de la courbure déterminée des pales du rotor lorsque le rotor (10) tourne.

9. Procédé selon l'une quelconque des revendications 3 à 8, **caractérisé en ce que** l'on utilise les signaux des dispositifs d'inclinomètre (30A, 30B, 31A, 31B) comme critère pour la coupure de sécurité de l'éolienne.

10. Procédé selon l'une quelconque des revendications 3 à 9, **caractérisé en ce que** l'on transfère les données obtenues au moyen des dispositifs d'inclinomètre (30A, 30B, 31A, 31B) en ligne à un poste de diagnostic (50) distant de l'éolienne, afin d'évaluer l'état de l'éolienne.

11. Procédé selon la revendication 10, **caractérisé en ce que** l'on effectue la transmission par Internet, dans lequel on effectue un prétraitement des données avant la transmission.
